# EUROPÄISCHE PATENTSCHRIFT

(11) **EP 2 087 261 B1**
(45) Veröffentlichungstag und Bekanntmachung des Hinweises auf die Patenterteilung: **30.06.2010**
(21) Anmeldenummer: 07821253.7
(22) Anmeldetag: 12.10.2007
(51) Int. Cl.: F16H 61/12

(54) **VERFAHREN ZUM BETREIBEN EINES KRAFTFAHRZEUGS**
METHOD FOR OPERATING A MOTOR VEHICLE
PROCÉDÉ D'EXPLOITATION D'UNE AUTOMOBILE

(30) Priorität: 04.11.2006 DE 102006052102
(43) Veröffentlichungstag der Anmeldung: 12.08.2009
(73) Patentinhaber: ZF Friedrichshafen AG, 88038 Friedrichshafen (DE)
(72) Erfinder: BUCHHOLD, Oliver, 88693 Deggenhausertal (DE); MOSER, Wilhelm, 88213 Ravensburg (DE)
(86) Internationale Anmeldenummer: PCT/EP2007/060886
(87) Internationale Veröffentlichungsnummer: WO 2008/052871

(56) Entgegenhaltungen:
- WO-A-98/13620
- DE-A1- 19 819 780
- DE-A1- 19 823 762
- DE-A1- 19 827 117
- DE-A1- 19 958 075
- DE-A1-102004 036 098
- JP-A- 8 318 836

## Beschreibung

Die Erfindung betrifft ein Verfahren zum Betreiben eines Kraftfahrzeugs gemäß dem Oberbegriff des Patentanspruchs 1 bzw. 3.

Aus der WO 98/13620 ist eine automatisch gesteuerte Kupplung zwischen Motor und Antriebsstrang eines Kraftfahrzeugs mit ausgangsseitig der Kupplung angeordnetem, fahrerseitig schaltbarem Getriebe bekannt. Ein zum Öffnen und Schließen der Kupplung dienendes Stellaggregat wird von einer Sensorik unter Berücksichtigung vorgegebener Parameter gesteuert, wobei die Sensorik Signalgeber für die jeweils eingelegte Getriebestufe bzw. den jeweils eingelegten Gang sowie eingangsseitig und ausgangsseitig der Kupplung angeordnete Signalgeber zur Drehzahlerfassung aufweist, und das Schließen der Kupplung in Abhängigkeit von Drehzahldifferenzen zwischen dem Eingang und dem Ausgang der Kupplung steuert. Falls die Signale der Signalgeber für die ausgangsseitige Drehzahl nicht mehr zur Verfügung stehen, werden Ersatzsignale aus anderen Parametern berechnet. Insbesondere wird vorgeschlagen, dass bei geöffneter Kupplung von einer seit einer letzten Phase des vorangegangenen Schließzustandes der Kupplung gleich gebliebenen Abtriebsdrehzahl des Getriebes ausgegangen und unter Berücksichtigung der jeweils eingelegten Getriebestufe die Drehzahl des Ausgangs der Kupplung ermittelt wird.

Ferner ist es bekannt, dass bei der Steuerung von automatisierten Schaltgetrieben die Kenntnis der Abtriebsdrehzahl des Getriebes von besonderer Bedeutung ist. Üblicherweise wird daher ein ermitteltes Drehzahlsignal eines Drehzahlsensors an der Getriebeausgangswelle hinsichtlich seiner Plausibilität mit Raddrehzahlsignalen von Sensoren an den Hinterräder des Fahrzeugs verglichen, wobei diese Raddrehzahlsignale auch zur Steuerung eines Antiblockiersystem oder eines Antischlupfregelungssystems (ABS/ASR-Systems) zur Verfügung stehen. Insbesondere sollen durch eine solche Plausibilisierung der ermittelten Drehzahlwerte der Getriebeabtriebswelle folgende Fehlfunktionen verhindert werden:
a) Die gemessene Abtriebsdrehzahl des Getriebes ist Null und zeigt daher einen Stillstand des Kraftfahrzeugs an, obwohl sich dasselbe tatsächlich in Fahrt befindet. In dieser Betriebssituation kann ein automatisches Einlegen des ersten Ganges als Anfahrgang zu einer Zerstörung der Kupplung durch unzulässig hohe Drehzahlen der Getriebeeingangswelle führen.
b) Die gemessene Abtriebsdrehzahl des Getriebes ist größer als Null und zeigt damit eine Geschwindigkeit des Fahrzeugs an, obwohl sich das Kraftfahrzeug tatsächlich im Stillstand befindet. Dieser Umstand kann zur fälschlichen Feststellung einer Fahrzeugbewegung und dadurch zum automatischen Schließen der Kupplung führen, so dass ein unbeabsichtigtes Anfahren des Kraftfahrzeugs bewirkt wird, da die automatisierte Kupplung gemäß bekannter Steuerungsverfahren beim Fahren auch ohne eine Fahrpedalauslenkung geschlossen wird, um die Bremswirkung des Antriebsmotors zu nutzen.

Die Plausibilisierung der ermittelten Drehzahlsignale erfolgt herkömmlich derart, dass ein arithmetischer Mittelwert aus den sensorisch erfassten Raddrehzahlen der beiden Hinterräder des Kraftfahrzeugs gebildet wird, die Hinterdifferentialübersetzung eingerechnet wird, und die so ermittelte Antriebsdrehzahl des Hinterachsgetriebes mit der sensorisch erfassten Abtriebsdrehzahl des Getriebes verglichen wird. Das arithmetische Mittel der Drehzahlsignale der beiden Hinterraddrehzahlsensoren wird genutzt, um die durch das Differentialgetriebe bei Kurvenfahrten auszugleichenden Drehzahlunterschiede zwischen den beiden Hinterrädern des Fahrzeuges zu mitteln.

Bei dieser an sich vorteilhaften Drehzahlplausibilisierung kann jedoch nicht ausgeschlossen werden, dass die Signalübertragung von zumindest einem der Drehzahlsensoren an den Hinterrädern infolge von Schäden am Drehzahlsensor selbst oder durch Fehler in den Signalleitungen und/oder deren elektrischen Kontakten ausfällt. Im Ergebnis einer solchen für den Weiterbetrieb des Kraftfahrzeugs schädlichen Fehlmeldung wird in Abhängigkeit vom aktuellen Betriebszustand des Kraftfahrzeugs beispielsweise während der Fahrt eine Schaltung des Getriebes in einen Anfahrgang verhindert, oder es wird im Stillstand des Kraftfahrzeugs das Getriebe in seine Neutral-Stellung geschaltet, wodurch das Fahrzeug nicht mehr angefahren werden kann. Durch beide bekannte Steuerungsreaktionen ist der Betrieb des Fahrzeugs eingeschränkt bzw. nicht mehr möglich.

Die DE 198 19 780 A1 offenbart eine Vorrichtung zur Steuerung oder Notbetriebssteuerung eines Einrückzustandes einer automatisiert betätigbaren Kupplung im Antriebsstrang eines Kraftfahrzeuges. Es ist zumindest ein Sensor vorgesehen, welcher die Stellung eines getriebeseitigen Stellorgans detektiert und ein weiterer Sensor ist vorgesehen, welcher die Stellung eines Schalthebels detektiert. Bei Ausfall oder Defekt zumindest eines Sensors schaltet die Steuereinheit in eine Notbetriebsart um, in welcher das fehlerhafte oder nicht vorhandene Signal des Sensors nicht benötigt oder verwendet wird.

Die DE 199 58 075 A1 offenbart ein Verfahren zum Betreiben eines Kraftfahrzeuges mit einer Getriebeeinrichtung und einer Drehmomentübertragungseinrichtung, die jeweils im Drehmomentfluss zwischen einer Antriebseinrichtung und einer Antriebsachse angeordnet sind. Durch das hier beschriebene Verfahren wird verhindert, dass in Folge eines Schaltvorganges der Getriebeeinrichtung Motordrehzahlen auftreten, die die Betriebssicherheit des Kraftfahrzeugs zumindest reduzieren.

In der DE 198 23 762 A1 wird ein Verfahren gemäß dem Oberbegriff des Anspruchs 1 bzw. 3 beschrieben. Dem dort beschrieberem Steuergerät wird eine Mehrzahl von Eingangssignalen zugeführt und aus den Eingangssignalen werden Steuersignale zur Ansteuerung von Aktuatoren berechnet. Beim Fehlen eines Eingangssignals oder bei fehlerhaftem Eingangssignal werden die betroffenen Steuersignale aus einem oder mehreren anderen Eingangssignalen berechnet.

Vor diesem Hintergrund liegt der Erfindung die Aufgabe zugrunde, eine verbesserte Plausibilitätsstrategie vorzuschlagen, welche den Weiterbetrieb des Kraftfahrzeugs beim Ausfall von lediglich zumindest einem der beiden Signale der Drehzahlsensoren an den Hinterrädern durch einen Defekt derselben oder durch Fehler in der Signalleitung und/oder deren Kontakten gestattet bzw. die Fahrbarkeit des Kraftfahrzeugs in diesem Fall nicht oder nur geringfügig einschränkt.

Die Lösung dieser Aufgabe ergibt sich aus den Merkmalen des Anspruchs 1 bzw. 3 während vorteilhafte Ausgestaltungen und Weiterbildungen der Erfindung den Unteransprüchen entnehmbar sind.

Demnach betrifft die Erfindung ein Verfahren zum Betreiben eines Kraftfahrzeugs mit einem automatisierten Schaltgetriebe, welches über eine Kupplung mit einer Antriebsmaschine verbindbar ist, wobei die Abtriebsdrehzahl des Schaltgetriebes sensorisch erfasst und dieselbe durch Vergleich mit einem arithmetischen Mittelwert aus sensorisch erfassten Raddrehzahlen der Hinterräder des Kraftfahrzeugs plausibilisiert wird. Zudem ist zur Lösung der Aufgabe vorgesehen, dass beim Ausfall zumindest eines der beiden generierten Signale der Raddrehzahlsensoren der Hinterräder das arithmetische Mittel aus sensorisch erfassten Raddrehzahlen der Vorderräder zur Plausibilisierung der Abtriebsdrehzahl des Schaltgetriebes herangezogen wird.

Gemäß einer ersten Variante des Verfahrens werden bei Feststellung signifikanter Unterschiede zwischen dem arithmetischen Mittelwert der Raddrehzahlen der Vorderräder und der Abtriebsdrehzahl des Getriebes Schaltungen desselben verhindert. Insbesondere werden Schaltungen des Schaltgetriebes verhindert, wenn die Abtriebsdrehzahl einen Fahrzeugstillstand anzeigt, obwohl sich das Kraftfahrzeug in Fahrt befindet.

Weiter ist vorgesehen, dass dann, wenn das arithmetische Mittel der Raddrehzahlen der Vorderräder und die Abtriebsdrehzahl des Schaltgetriebes ohne signifikante Abweichungen übereinstimmen, Schaltungen des Getriebes gestattet werden.

Gemäß einer zweiten Variante des Verfahrens ist vorgesehen, dass bei Feststellung signifikanter Unterschiede zwischen dem arithmetischen Mittelwert der Raddrehzahlen der Vorderräder und der Abtriebsdrehzahl des Schaltgetriebes bei einer Fahrpedalstellung unter einer zuvor festlegbaren messwertbezogenen Auslenkschwelle des Fahrpedalauslenkweges ein Schließen der Kupplung verhindert wird.

Das Schließen der Kupplung wird beispielsweise dann verhindert, wenn die Abtriebsdrehzahl des Schaltgetriebes eine Geschwindigkeit des Kraftfahrzeugs anzeigt, obwohl sich dasselbe tatsächlich im Stillstand befindet.

Außerdem kann vorgesehen sein, dass dann, wenn das arithmetische Mittel aus den Raddrehzahlen der Vorderräder mit der Abtriebsdrehzahl des Schaltgetriebes ohne signifikante Unterschiede übereinstimmt, ein Schließen der Kupplung gestattet wird.

Zur Definition des Begriffs des signifikanten Unterschiedes zwischen dem arithmetischen Mittelwert aus den Raddrehzahlen der Vorderräder und der Abtriebsdrehzahl des Schaltgetriebes wird hier eine maximale Drehzahlabweichung von 5 % bis 10 % angegeben. Die messwertbezogene Auslenkschwelle des Fahrpedals, ab deren Überschreiten gemäß dem beschriebenen Verfahren die Kupplung geschlossen werden darf, wird hier mit 5 % bis 10 % des maximalen Stellweges des Fahrpedals definiert.

Zur Verdeutlichung der Erfindung ist der Beschreibung eine Zeichnung beigefügt.
In dieser zeigt:
- Fig. 1: einen Antriebsstrang eines Kraftfahrzeugs mit einem auto- matisierten Schaltgetriebe, welches über eine Kupplung mit einer Antriebsmaschine verbindbar ist und
- Fig. 2: ein Ablaufdiagramm bezüglich der Plausibilisierung der erfassten Abtriebsdrehzahl des Getriebes gemäß Fig. 1.

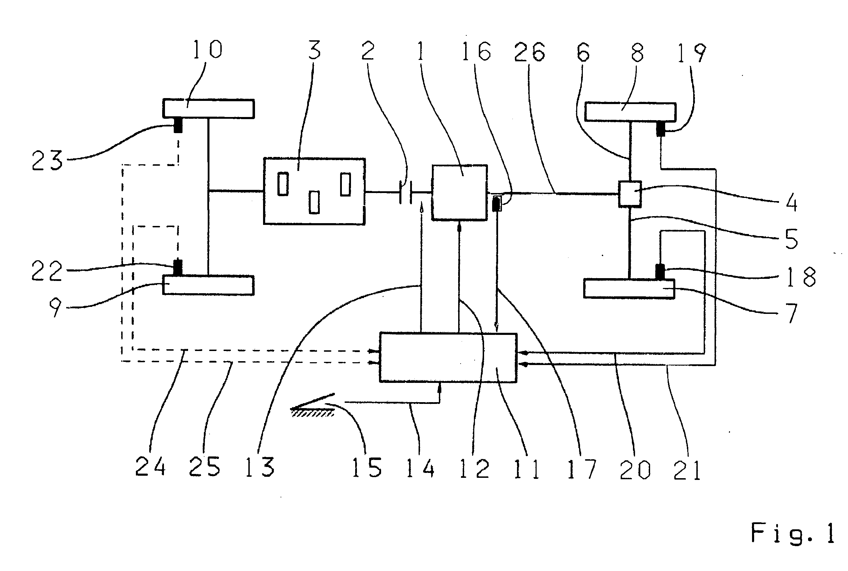

Demnach zeigt Fig. 1 schematisch einen an sich bekannten Antriebsstrang eines Kraftfahrzeugs mit einem Hinterachsantrieb und mit einem automatisierten Schaltgetriebe 1, welches über eine Kupplung 2 mit einer Antriebsmaschine 3, vorliegend einer Brennkraftmaschine, verbindbar ist. Das Getriebe 1 ist über seine Abtriebswelle und eine Kardanwelle 26 antriebstechnisch mit einem Differentialgetriebe 4 verbunden, welches über zwei Achswellen 5, 6 die Hinterräder 7, 8 des Kraftfahrzeugs antreibt. Ferner sind die beiden Vorderräder 9, 10 des Kraftfahrzeugs dargestellt.

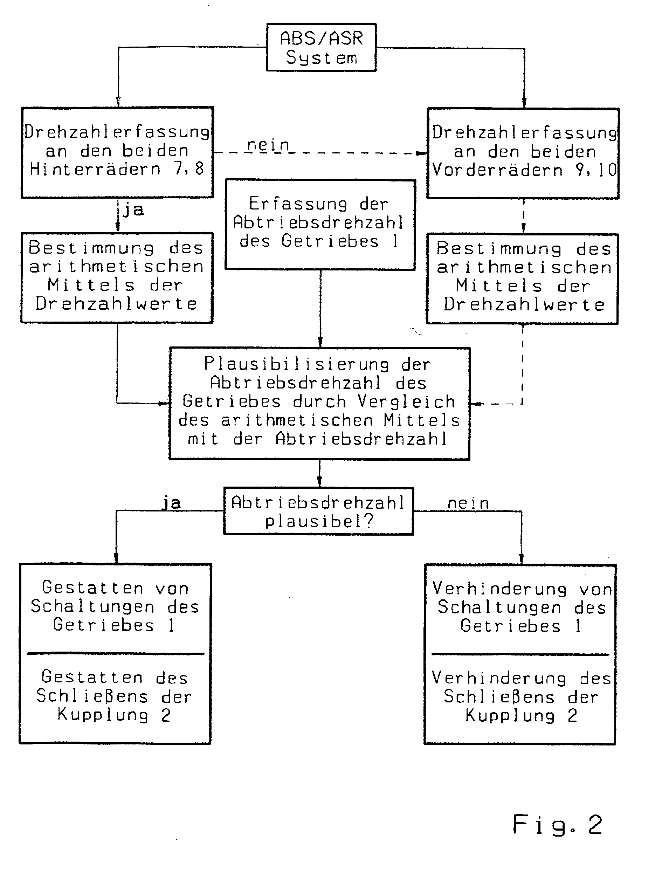

Zum Antriebsstrang gehört des Weiteren eine Steuerungseinheit 11, welche über Steuerleitungen 12, 13 und Sensorleitungen 14 mit dem Getriebe 1, der Kupplung 2 und einem Fahrpedal 15 verbunden ist. Der in Fig. 2 beispielhaft dargestellte Ablauf des Verfahrens gemäß der Erfindung findet in dieser Steuerungseinheit 11 statt, die vorzugsweise als Getriebesteuerungsgerät ausgebildet ist.

Wie bereits einleitend erwähnt wurde, ist bei der Übersetzungssteuerung von automatisierten Getrieben 1 die mittels eines oder mehrerer Drehzahlsensoren 16 erfasste Getriebeabtriebsdrehzahl bzw. das daraus generierte Abtriebsdrehzahlsignal 17 von besonderer Bedeutung. Aus diesem Grund werden mittels jeweils eines oder mehrerer Raddrehzahlsensoren 18, 19 die Raddrehzahlen der Hinterräder 7, 8 als Drehzahlwerte 20 bzw. 21 erfasst. Diese Drehzahlwerte stehen, wie Fig. 2 verdeutlicht, auch einem Antiblockiersystem ABS und/oder einem Antischlupfregelungssystem ASR des Fahrzeugs zur Verfügung und werden über ein an sich bekanntes Daten-Bus-System bereitgestellt. In der Steuerungseinheit 11 wird aus diesen Drehzahlwerte 20 bzw. 21 der Hinterräder 7, 8 der arithmetische Mittelwert der Hinterraddrehzahlen gebildet.

Die Plausibilisierung der mittels des Sensors 16 gemessenen Abtriebsdrehzahl des Getriebes 1 auf deren Richtigkeit erfolgt durch einen Vergleich derselben mit dem gebildeten arithmetischen Mittelwert der Raddrehzahlen der Hinterräder 7, 8 durch eine in der Steuerungseinheit 11 abgespeicherte Software. Sofern der ermittelte Drehzahlwert der Getriebeabtriebswelle als plausibel bewertet wird, kann dieser für die Durchführung der Übersetzungssteuerung durch die Steuerungseinheit 11 genutzt werden. Erweist sich dieser Drehzahlwert der Getriebeabtriebswelle als unplausibel und damit als falsch, können als Folge dieser Erkennung durch die Steuerungseinheit 11 unter anderem nachteilige Schaltungen des Getriebes 1 und/oder ein unerwünschtes Schließen der Kupplung 2 verhindert werden.

Um nunmehr dem Problem eines etwaigen Wegfalls zumindest eines der beiden Signale 20, 21 der hinteren Raddrehzahlsensoren 18, 19 durch Ausfall derselben oder durch Fehler in der Signalleitung und/oder deren elektrischen Kontakten zu begegnen, und um auch weiterhin die Fahrbarkeit des Kraftfahrzeugs bzw. dessen sicheren Betrieb zu gewährleisten, wird gemäß der Erfindung bei einem derartigen Ausfall das arithmetische Mittel aus mittels Raddrehzahlsensoren 22, 23 erfassten Raddrehzahlen der Vorderräder 9, 10 und daraus generierten Signalen 24, 25 gebildet, sowie dasselbe zur Plausibilisierung der Abtriebsdrehzahl des Getriebes 1 herangezogen (Fig. 1 und 2).

Das Erfordernis der Bildung des arithmetischen Mittelwertes der erfassten Drehzahlen der Vorderräder 9, 10 resultiert aus dem Umstand, dass die Vorderräder 9, 10 nicht formschlüssig mit dem Abtrieb des Getriebes 1 verbunden sind. Hierdurch sind Unterschiede zwischen den Raddrehzahlen der Vorderräder 9, 10 und der Abtriebsdrehzahl des Getriebes 1 möglich, die nicht durch einen Fehler der Drehzahlsensoren 16, 22, 23 an sich verursacht sind, sondern z. B. durch ein Durchdrehen der angetriebenen Hinterräder 7, 8 auf glattem Untergrund.

Gesetzt den Fall, dass signifikante Unterschiede zwischen dem arithmetischen Mittel der Raddrehzahlen der Vorderräder 9, 10 und der Abtriebsdrehzahl des Getriebes 1 festgestellt werden, so werden durch die Steuerungseinheit 11 insbesondere dann nachteilige Schaltungen des Getriebes 1 verhindert, wenn die Abtriebsdrehzahl desselben den Stillstand des Kraftfahrzeugs anzeigt, obwohl sich dasselbe in Fahrt befindet. Ein solcher oder anderer signifikanter Unterschied der zu vergleichenden Drehzahlwerte kann beispielsweise eine Abweichung des Mittelwertes der Raddrehzahlen der Vorderräder 9, 10 von der Abtriebsdrehzahl des Getriebes 1 in Höhe von 5 % bis 10 % sein.

Durch diese Maßnahme wird besonders vorteilhaft beispielsweise das fälschliche Einlegen des ersten Ganges oder eines anderen Anfahrgangs und demgemäß eine Zerstörung oder zumindest ein sehr starker Verschleiß der Kupplung 2 infolge unzulässig hoher Drehzahlen der Eingangswelle des Getriebes 1 verhindert.

Werden stattdessen keine wie oben definierten signifikanten Unterschiede zwischen dem Mittelwert der Raddrehzahlen der Vorderräder 9, 10 und der Abtriebsdrehzahl des Getriebes 1 erkannt, so werden die genannten Schaltungen des Getriebes 1 gestattet und mittels der Steuerungseinheit 11 durch eine diesbezügliche Ansteuerung von Getriebeaktuatoren eingeleitet.

Ebenso ist es möglich, dass wie oben oder anders definierte signifikante Unterschiede zwischen dem arithmetischen Mittelwert der Raddrehzahlen der Vorderräder 9, 10 und der Abtriebsdrehzahl des Getriebes 1 festgestellt werden, wenn die Abtriebsdrehzahl des Getriebes 1 eine Geschwindigkeit des Kraftfahrzeuges anzeigt, obwohl sich dieses tatsächlich im Stillstand befindet. In diesem konkreten Fall wird bei einer Fahrpedalstellung unter einer voreinstellbaren Schwelle ein Schließen der Kupplung 2 verhindert. Ein diesbezüglicher messwertbezogener Schwellwert der Fahrpedalauslenkung kann beispielsweise im Wertebereich von 5 % bis 10 % des maximalen Stellweges des Fahrpedals liegen. Durch diese Maßnahme wird in vorteilhafter Weise ein unbeabsichtigtes Anfahren des Kraftfahrzeugs infolge eines etwaig fälschlichen Erkennens eines Bewegens des Kraftfahrzeugs, einhergehend mit einem für solche Betriebsfälle konventionell steuerungstechnisch vorgesehenen Schließen der Kupplung 2, vermieden.

Werden stattdessen keine signifikanten Unterschiede zwischen dem arithmetischen Mittelwert der Raddrehzahlen der Vorderräder 9, 10 und der Abtriebsdrehzahl des Getriebes 1 erkannt, so dass der arithmetische Mittelwert aus den Raddrehzahlen der Vorderräder 9, 10 mit der Abtriebsdrehzahl des Getriebes 1 zumindest annähernd übereinstimmt, wird bei Bedarf ein Schließen der Kupplung 2 gestattet.

Vorstehende erfindungsgemäße Plausibilisierungsschritte gehen bei voller Gewährleistung der Fahrzeugsicherheit mit keinen oder nur geringfügigen Einschränkungen der Fahrbarkeit des Kraftfahrzeugs einher, da lediglich eine konventionelle Software in der Steuerungseinheit 11 entsprechender Anpassungen bedarf.

Was die Nutzung der beiden Raddrehzahlsensoren 22, 23 der Vorderräder 9, 10 anbelangt, so sind auch diese überwiegend bereits Bestandteil vorhandener Fahrzeugsicherheitssysteme, beispielsweise der bereits oben erwähnten ABS/ASR-Systeme.

Im Übrigen können die genannten Plausibilisierungsstrategien auch bei einer Neutral-Position des Getriebes und bei offener Kupplung 2 durchgeführt werden. Des Weiteren sind zusätzliche Daten, wie beispielsweise die Drehzahl der Antriebsmaschine und/oder die Getriebeeingangsdrehzahl aufgrund des vorstehend beschriebenen Verfahrens für diesen Zweck entbehrlich, da dieses die ohnehin zur Verfügung stehenden Raddrehzahlen der Vorder- und Hinterräder aus dem ABS- bzw. ASR-System nutzt.

Das Verfahren gemäß der Erfindung bietet schließlich den Vorteil, dass dann, wenn Drehzahlinformation von den Hinterrädern vorliegen, diese zu einer sehr genauen Plausibilitätsprüfung genutzt werden. Erst dann, wenn diese Drehzahlinformationen von den Hinterrädern nicht oder nur von einem Drehzahlsensor vorliegen, wird die Plausibilitätsprüfung quasi im Notbetrieb unter Nutzung der Drehzahlinformationen von den Vorderrädern, gegebenenfalls mit etwas reduzierter Genauigkeit, durchgeführt.

### Bezugszeichen

- 1: Schaltgetriebe
- 2: Kupplung
- 3: Antriebsmaschine
- 4: Differentialgetriebe
- 5: Achswelle
- 6: Achswelle
- 7: Hinterrad
- 8: Hinterrad
- 9: Vorderrad
- 10: Vorderrad
- 11: Steuerungseinheit
- 12: Steuerleitung zum Getriebe
- 13: Steuerleitung zur Kupplung
- 14: Sensorleitung zum Fahrpedalsensor
- 15: Fahrpedal
- 16: Drehzahlsensor (Abtriebsdrehzahl Getriebe)
- 17: Abtriebsdrehzahlsignal
- 18: Raddrehzahlsensor am Hinterrad 7
- 19: Raddrehzahlsensor am Hinterrad 8
- 20: Signal vom Raddrehzahlsensor 18
- 21: Signal vom Raddrehzahlsensor 19
- 22: Raddrehzahlsensor am Vorderrad 9
- 23: Raddrehzahlsensor am Vorderrad 10
- 24: Signal vom Raddrehzahlsensor 22
- 25: Signal vom Raddrehzahlsensor 23
- 26: Kardanwelle

## Patentansprüche

1. Verfahren zum Betreiben eines Kraftfahrzeugs mit einem automatisierten Schaltgetriebe (1), welches über eine Kupplung (2) mit einer Antriebsmaschine (3) verbindbar ist, wobei die Abtriebsdrehzahl des Schaltgetriebes (1) sensorisch erfasst und dieselbe durch Vergleich mit einem arithmetischen Mittelwert aus sensorisch erfassten Raddrehzahlen der Hinterräder (7, 8) des Kraftfahrzeugs plausibilisiert wird, wobei beim Ausfall zumindest eines der beiden generierten Signale (20, 21) der Raddrehzahlsensoren (18, 19) der Hinterräder (7, 8) das arithmetische Mittel aus sensorisch erfassten Raddrehzahlen der Vorderräder (9, 10) zur Plausibilisierung der Abtriebsdrehzahl des Schaltgetriebes (1) herangezogen wird, **dadurch gekennzeichnet, dass** bei Feststellung signifikanter Unterschiede zwischen dem arithmetischen Mittelwert der Raddrehzahlen der Vorderräder (9, 10) und der Abtriebsdrehzahl des Schaltgetriebes (1) Schaltungen desselben verhindert werden, wenn die Abtriebsdrehzahl des Schaltgetriebes einen Stillstand des Kraftfahrzeuges anzeigt, obwohl sich das Kraftfahrzeug in Fahrt befindet.

2. Verfahren nach Anspruch 1, **dadurch gekennzeichnet, dass** dann, wenn der arithmetische Mittelwert aus den Raddrehzahlen der Vorderräder (9, 10) und die Abtriebsdrehzahl des Schaltgetriebes (1) ohne signifikante Unterschiede übereinstimmen, Schaltungen desselben gestattet werden.

3. Verfahren zum Betreiben eines Kraftfahrzeugs mit einem automatisierten Schaltgetriebe (1), welches über eine Kupplung (2) mit einer Antriebsmaschine (3) verbindbar ist, wobei die Abtriebsdrehzahl des Schaltgetriebes (1) sensorisch erfasst und dieselbe durch Vergleich mit einem arithmetischen Mittelwert aus sensorisch erfassten Raddrehzahlen der Hinterräder (7, 8) des Kraftfahrzeugs plausibilisiert wird, wobei beim Ausfall zumindest eines der beiden generierten Signale (20, 21) der Raddrehzahlsensoren (18, 19) der Hinterräder (7, 8) das arithmetische Mittel aus sensorisch erfassten Raddrehzahlen der Vorderräder (9, 10) zur Plausibilisierung der Abtriebsdrehzahl des Schaltgetriebes (1) herangezogen wird, **dadurch gekennzeichnet, dass** bei Feststellung signifikanter Unterschiede zwischen dem arithmetischen Mittelwert der Raddrehzahlen der Vorderräder (9, 10) und der Abtriebsdrehzahl des Schaltgetriebes (1) ein Schließen der Kupplung (2) bei einer Fahrpedalstellung unter einer zuvor festlegbaren messwertbezogenen Auslenkschwelle des Fahrpedalstellweges verhindert wird, wenn die Abtriebsdrehzahl des Schaltgetriebes (1) eine Geschwindigkeit des Kraftfahrzeugs anzeigt, obwohl sich das Kraftfahrzeug im Stillstand befindet.

4. Verfahren nach Anspruch 3, **dadurch gekennzeichnet, dass** dann, wenn der arithmetische Mittelwert aus den Raddrehzahlen der Vorderräder (9, 10) mit der Abtriebsdrehzahl des Schaltgetriebes (1) ohne signifikante Unterschiede übereinstimmt, ein Schließen der Kupplung (2) gestattet wird.

5. Verfahren nach zumindest einem der Ansprüche 1 bis 4, **dadurch gekennzeichnet, dass** als signifikanter Unterschied zwischen dem arithmetischen Mittel aus den Raddrehzahlen der Vorderräder (9, 10) und der Abtriebsdrehzahl des Schaltgetriebes (1) eine Drehzahlabweichung von 5 % bis 10 % definiert ist.

6. Verfahren nach Anspruch 3, **dadurch gekennzeichnet, dass** die Auslenkschwelle des Fahrpedals (15) mit 5 % bis 10 % des maximalen Stellweges des Fahrpedals (15) definiert ist.

## Claims

1. Method for operating a motor vehicle having an automated manual transmission (1) which can be connected via a clutch (2) to a drive machine (3), wherein the output speed of the manual transmission (1) is detected by sensor and the plausibility thereof is checked by comparison with an arithmetic mean value of wheel speeds of the rear wheels (7, 8) of the motor vehicle which are detected by sensor, wherein, when at least one of the two generated signals (20, 21) of the wheel speed sensors (18, 19) of the rear wheels (7, 8) fails, the arithmetic mean of wheel speeds of the front wheels (9, 10) which are detected by sensor is used for checking the plausibility of the output speed of the manual transmission (1), **characterized in that**, when significant differences are determined between the arithmetic mean value of the wheel speeds of the front wheels (9, 10) and the output speed of the manual transmission (1), shifting operations thereof are prevented if the output speed of the manual transmission indicates a stationary state of the motor vehicle even though the motor vehicle is in the travel mode.

2. Method according to Claim 1, **characterized in that** if the arithmetic mean value of the wheel speeds of the front wheels (9, 10) and the output speed of the manual transmission (1) correspond without significant differences, shifting operations thereof are permitted.

3. Method for operating a motor vehicle having an automated manual transmission (1) which can be connected via a clutch (2) to a drive machine (3), wherein the output speed of the manual transmission (1) is detected by sensor and the plausibility thereof is checked by comparison with an arithmetic mean value of wheel speeds of the rear wheels (7, 8) of the motor vehicle which are detected by sensor, wherein, when at least one of the two generated signals (20, 21) of the wheel speed sensors (18, 19) of the rear wheels (7, 8) fails, the arithmetic mean of wheel speeds of the front wheels (9, 10) which are detected by sensor is used for checking the plausibility of the output speed of the manual transmission (1), **characterized in that**, when significant differences are determined between the arithmetic mean value of the wheel speeds of the front wheels (9, 10) and the output speed of the manual transmission (1), closing of the clutch (2) in an accelerator pedal position below a previously definable measured-value-related deflection threshold of the accelerator pedal actuation travel is prevented if the output speed of the manual transmission (1) indicates a velocity of the motor vehicle even though the motor vehicle is in the stationary state.

4. Method according to Claim 3, **characterized in that** if the arithmetic mean value of the wheel speeds of the front wheels (9, 10) corresponds to the output speed of the manual transmission (1) without significant differences, closing of the clutch (2) is permitted.

5. Method according to at least one of Claims 1 to 4, **characterized in that** a rotational speed difference of 5% to 10% is defined as a significant difference between the arithmetic mean of the wheel speeds of the front wheels (9, 10) and the output speed of the manual transmission (1).

6. Method according to Claim 3, **characterized in that** the deflection threshold of the accelerator pedal (15) is defined as 5% to 10% of the maximum actuation travel of the accelerator pedal (15).

## Revendications

1. Procédé pour faire fonctionner un véhicule automobile avec une boîte de changement de vitesse automatisée (1), qui peut être connectée par le biais d'un embrayage (2) à un moteur d'entraînement (3), le régime de sortie de la boîte de changement de vitesse (1) étant détecté par des capteurs et étant soumis à une analyse de plausibilité par comparaison avec une valeur moyenne arithmétique provenant de vitesses de rotation des roues arrière (7, 8) du véhicule automobile détectées par des capteurs, dans lequel, dans le cas d'une panne d'au moins l'un des deux signaux générés (20, 21) des capteurs de vitesse de rotation des roues (18, 19) des roues arrière (7, 8) la moyenne arithmétique provenant des vitesses de rotation des roues avant (9, 10) détectées par des capteurs est utilisée pour l'analyse de plausibilité du régime de sortie de la boîte de changement de vitesse (1), **caractérisé en ce que** dans le cas où l'on constate des différences significatives entre la valeur moyenne arithmétique des vitesses de rotation des roues avant (9, 10) et le régime de sortie de la boîte de changement de vitesse (1), on empêche des changements de vitesse de celle-ci, quand le régime de sortie de la boîte de changement de vitesse indique un arrêt du véhicule automobile, bien que le véhicule automobile roule.

2. Procédé selon la revendication 1, **caractérisé en ce que** si la valeur moyenne arithmétique provenant des vitesses de rotation des roues avant (9, 10) et le régime de sortie de la boîte de changement de vitesse (1) coïncident sans différences significatives, des changements de vitesse de celle-ci sont autorisés.

3. Procédé pour faire fonctionnement un véhicule automobile avec une boîte de changement de vitesse automatisée (1), qui peut être connectée par le biais d'un embrayage (2) à un moteur d'entraînement (3), le régime de sortie de la boîte de changement de vitesse (1) étant détecté par des capteurs et étant soumis à une analyse de plausibilité par comparaison avec une valeur moyenne arithmétique provenant de vitesses de rotation des roues arrière (7, 8) du véhicule automobile détectées par des capteurs, dans lequel, dans le cas d'une panne d'au moins l'un des deux signaux générés (20, 21) des capteurs de vitesse de rotation des roues (18, 19) des roues arrière (7, 8) la moyenne arithmétique provenant des vitesses de rotation des roues avant (9, 10) détectées par des capteurs est utilisée pour l'analyse de plausibilité du régime de sortie de la boîte de changement de vitesse (1), **caractérisé en ce que** dans le cas où l'on constate des différences significatives entre la valeur moyenne arithmétique des vitesses de rotation des roues avant (9, 10) et le régime de sortie de la boîte de changement de vitesse (1), une fermeture de l'embrayage (2) est empêchée dans le cas d'une position de la pédale d'accélération en dessous d'un seuil de déviation de la course de la pédale d'accélération, rapporté à une valeur de mesure pouvant être établie préalablement, si le régime de sortie de la boîte de changement de vitesse (1) indique une vitesse du véhicule automobile bien que le véhicule automobile soit à l'arrêt.

4. Procédé selon la revendication 3, **caractérisé en ce que,** si la valeur moyenne arithmétique provenant des vitesses de rotation des roues avant (9, 10) et le régime de sortie de la boîte de changement de vitesse (1) coïncident sans différences significatives, une fermeture de l'embrayage (2) est autorisée.

5. Procédé selon au moins l'une quelconque des revendications 1 à 4, **caractérisé en ce que** l'on définit, en tant que différence significative entre la moyenne arithmétique provenant des vitesses de rotation des roues avant (9, 10) et le régime de sortie de la boîte de changement de vitesse (1), un écart de régime de 5% à 10%.

6. Procédé selon la revendication 3, **caractérisé en ce que** le seuil de déviation de la pédale d'accélération (15) est défini par 5% à 10% de la course de déplacement maximale de la pédale d'accélération (15).
